# EUROPEAN PATENT APPLICATION

(11) **EP 4 760 485 A1**
(43) Date of publication of application: **17.06.2026**
(21) Application number: 25178770.1
(22) Date of filing: 26.05.2025
(51) Int. Cl.: G06F 8/10, G06F 8/30, G06F 8/35

(54) **METHOD AND SYSTEM FOR GENERATING SCRIPTS FOR SIMULATION MODEL DEVELOPMENT**

(30) Priority: 12.12.2024 IN 202441098530
(71) Applicant: L & T Technology Services Limited, Chennai 600089 (IN)
(72) Inventor: TANDEL, SWAPNIL, Clarendon Hills, 60514 (US); PANDIT, PRABHAKAR, Saskatoon, S7T 0M8 (CA); SINGH CHHOKRA, MANMEET, 400082 Mumbai (IN); DWARIKA PRASAD GUPTA, ROHIT KUMAR, 400089 Mumbai (IN)
(74) Representative: Studio Torta S.p.A.

(57) **Abstract**

This disclosure relates to method and system for generating scripts for simulation model development. The method may include retrieving a plurality of requirements from a user input, and a Static Knowledge Corpus (SKC), and a Dynamic Knowledge Corpus (DKC) from a data storage. The method may further include generating, via a Large Language Model (LLM), an interface list corresponding to each of the plurality of requirements using the SKC and the DKC. The method may further include generating, via the LLM, a pseudo code corresponding to each of the plurality of requirements using the interface list and the SKC. For each of the plurality of requirements, the method may further include adding the corresponding interface list and the corresponding pseudo code to a configuration file. The method may further include generating a script for simulation model development based on the configuration file.

## Description

### Technical Field

This disclosure relates generally to the development of simulation model, and more particularly to method and system for generating scripts for simulation model development.

### Background

Model-based design (MBD) is a practice of creating simulation models of physical systems (to-be-constructed systems or existing systems) to efficiently conduct studies of such systems. The simulation models may be software representations of any components of a physical system under study. Today, MBD is used across various industries and applications (such as motion control, signal processing, industrial equipment, aerospace, and automotive applications) for simulating complex systems. MBD enables developers to identify defects and design problems in early stages of a project, accommodate changes to mitigate the defects, and develop the system as per requirements.

Usage of MBD tools such as MATLAB, AutoSar, etc., may be crucial in such industries. However, scarcity of skilled MBD developers, coupled with high salaries of the MBD developers may render forming in-house large-scale-teams to create models a challenging endeavor. Shortage of the skilled MBD developers may also lead to longer product development time and reduced quality leading to increase in the cost. Additionally, in larger teams, maintaining models in long run may be difficult due to high attrition rate.

Thus, the present invention is directed to overcome one or more limitations stated above or any other limitations associated with the known arts.

### SUMMARY

In one embodiment, a method for generating scripts for simulation model development is disclosed. In one example, the method may include retrieving a plurality of requirements from a user input, and a Static Knowledge Corpus (SKC), and a Dynamic Knowledge Corpus (DKC) from a data storage. Each of the SKC and the DKC is a vector database. The SKC is based on generic domain data and generic Model Based Design (MBD) guidelines data. The DKC is based on project-specific data and user-specific MBD guidelines data. The method may further include generating, via a Large Language Model (LLM), an interface list corresponding to each of the plurality of requirements using the SKC and the DKC. The method may further include generating, via the LLM, a pseudo code corresponding to each of the plurality of requirements using the interface list and the SKC. For each of the plurality of requirements, the method may further include adding the corresponding interface list and the corresponding pseudo code to a configuration file. The method may further include generating a script for simulation model development based on the configuration file.

In one embodiment, a system for generating scripts for simulation model development is disclosed. In one example, the system may include a processor and a computer-readable medium communicatively coupled to the processor. The computer-readable medium may store processor-executable instructions, which, on execution, may cause the processor to retrieve a plurality of requirements from a user input, and an SKC, and a DKC from a data storage. Each of the SKC and the DKC is a vector database. The SKC is based on generic domain data and generic MBD guidelines data. The DKC is based on project-specific data and user-specific MBD guidelines data. The processor-executable instructions, on execution, may further cause the processor to generate, via an LLM, an interface list based on the plurality of requirements. The interface list may include an interface corresponding to each of the plurality of requirements using the SKC and the DKC. The processor-executable instructions, on execution, may further cause the processor to generate, via the LLM, a pseudo code corresponding to each of the plurality of requirements using the interface list and the SKC. For each of the plurality of requirements, the processor-executable instructions, on execution, may further cause the processor to add the corresponding interface list and the corresponding pseudo code to a configuration file. The processor-executable instructions, on execution, may further cause the processor to generate a script for simulation model development based on the configuration file.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for generating scripts for simulation model development, in accordance with some embodiments.
**FIG. 2** illustrates a functional block diagram of a memory of a computing device configured to generate scripts for simulation model development, in accordance with some embodiments.
**FIGS. 3A****,** **3B** are a high-level architecture of an exemplary system for generating scripts for simulation model development, in accordance with some embodiments.
**FIG. 4** illustrates a flow chart of an exemplary process for generating scripts for simulation model development, in accordance with some embodiments.
**FIG. 5** illustrates a flow chart of an exemplary process for generating a plurality of interface embeddings from the interface list to obtain an Interface List Corpus (ILC), in accordance with some embodiments.
**FIG. 6** illustrates a flow chart of an exemplary process for generating a pseudo code, in accordance with some embodiments.
**FIG. 7** illustrates a flow chart of a detailed exemplary process for generating a Static Knowledge Corpus (SKC) and a Dynamic Knowledge Corpus (DKC), in accordance with an embodiment.
**FIG. 8** illustrates a flow chart of an exemplary process for generating an Interface List Corpus (ILC), in accordance with an embodiment.
**FIG. 9** illustrates a flow chart of a detailed exemplary process for generating a Pseudo Code Corpus (PCC), in accordance with an embodiment.
**FIG. 10** illustrates a flow chart of an exemplary process for generating a Consolidated Specification Summary (CSS), in accordance with an embodiment.
**FIG. 11** illustrates a flow chart of an exemplary process for generating model script from consolidated summary, in accordance with an embodiments.
**FIG. 12** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

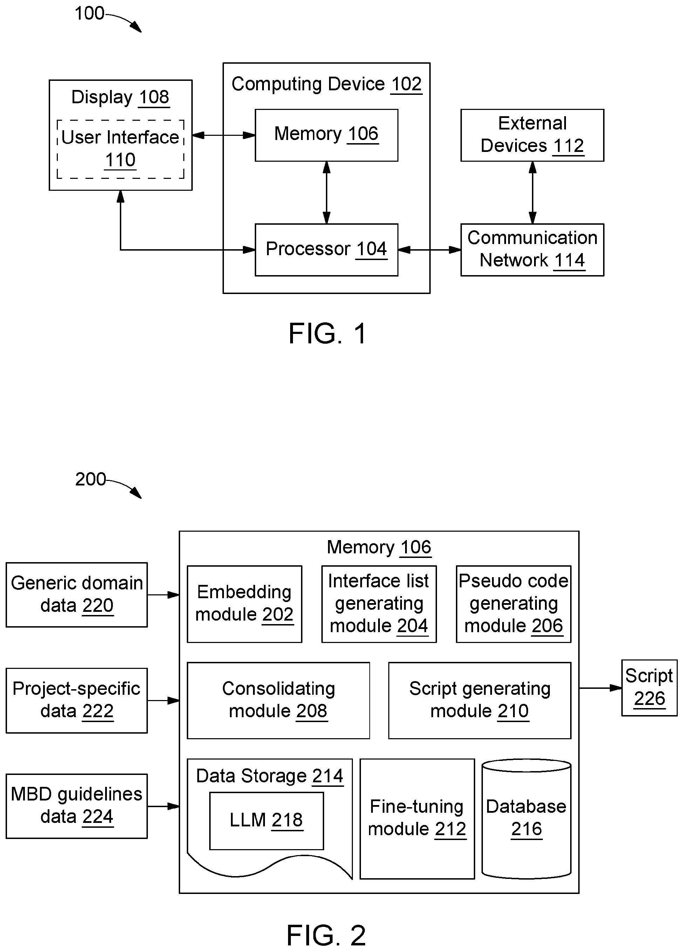

Referring now to FIG. 1, an exemplary system 100 for generating scripts for simulation model development is illustrated, in accordance with some embodiments. The script may include instructions written in a programming language for generation of the simulation model through a Model-Based Design (MBD) tool (for example, MATLAB, AutoSar, etc.). A simulation model may correspond to a physical system that may include one or more electronic integrated circuits (ICs), as well as passive and active devices. By way of an example, the physical system may be a control system (for example in vehicles, electronic devices, etc.), an autonomous system, an Advanced Driver Assistance System (ADAS), or the like. The simulation model may then be studied under various simulation conditions through the MBD tool to derive an estimate of performance of the physical system in real-world conditions.

The system 100 may include a computing device 102 (for example, a server, a desktop, a laptop, a notebook, a netbook, a tablet, a smartphone, a mobile phone, or any other computing device), in accordance with some embodiments of the present disclosure. The computing device 102 may generate scripts for simulation model development through a Large Language Model (LLM). By way of an example, the LLM may be, but may not be limited to, Generative Pre-trained Transformer (GPT)-3, GPT-3.5, GPT-4, Language Model for Dialogue Applications (LaMDA), Pathways Language Model (PaLM), Gemini, Claude, BigScience Large Open-science Open-access Multilingual Language Model (BLOOM), Large Language Model Meta AI (Llama), Mistral 7B, Mixtral 8x7B, Mixtral 8x22B, or the like.

As will be described in greater detail in conjunction with FIGS. 2 - 12, the computing device 102 may retrieve a plurality of requirements from a user input, and a Static Knowledge Corpus (SKC), and a Dynamic Knowledge Corpus (DKC) from a data storage. The plurality of requirements may be descriptions of features and functionalities of a project. The plurality of requirements may convey expectations of a user from the project. Each of the SKC and the DKC may be a vector database including data embeddings (i.e., data stored in form of vectors (or mathematical representations)). The SKC is based on generic domain data and generic Model Based Design (MBD) guidelines data. The DKC is based on project-specific data and user-specific MBD guidelines data. The computing device 102 may further generate, via a Large Language Model (LLM), interface list corresponding to each of the plurality of requirements using the SKC and the DKC.

Thereafter, the computing device 102 may generate, by the LLM, a pseudo code corresponding to each of the plurality of requirements using the interface list and the SKC. The pseudo code may be a step-by-step description of an algorithm. The pseudo code may be a programming language-agnostic representation of the algorithm. For each of the plurality of requirements, the computing device 102 may add the corresponding interface list and the corresponding pseudo code to a configuration file. Further, based on the configuration file, the computing device 102 may generate a script for simulation model development based on the configuration file.

In some embodiments, the computing device 102 may include one or more processors 104 and a memory 106. The memory 106 may store instructions that, when executed by the one or more processors 104, cause the one or more processors 104 to generate scripts for simulation model development, in accordance with aspects of the present disclosure. The memory 106 may also store various data (for example, a plurality of requirements, generic domain data, MBD guidelines data, embeddings data, interface list, pseudo codes, and the like) that may be captured, processed, and/or required by the computing device 102. The memory 106 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.).

The system 100 may further include a display 108. The system 100 may interact with a user via a user interface 110 accessible via the display 108. The system 100 may also include one or more external devices 112. In some embodiments, the computing device 102 may interact with the one or more external devices 112 over a communication network 114 for sending or receiving various data. The external devices 112 may include, but may not be limited to, a remote server, a digital device, or another computing system.

Referring now to FIG. 2, a functional block diagram of the memory 106 of the computing device 102 configured to generate scripts for simulation model development is illustrated, in accordance with some embodiments. FIG. 2 is explained in conjunction with FIG. 1. The memory 106 may include an embedding module 202, an interface list generating module 204, a pseudo code generating module 206, a consolidating module 208, and a script generating module 210, and a fine-tuning module 212. The memory 106 may further include a data storage 214 and a database 216. The data storage 214 may include an LLM 218.

The embedding module 202 may receive generic domain data 220, project-specific data 222, and MBD guidelines data 224. The project specific data 222 may correspond to a project (such as a specific automobile model, a control system model, etc.). The project-specific data 222 may include project-specific calendars, activity codes, and resources. The project-specific calendars, the activity codes, and the resources may be customized to meet the needs of the project. The project-specific data 222 may be provided by a user or a client (e.g., an automobile design and/or manufacturing company).

The generic domain data 220 may include generic information (for example, performance norms, ranges, rules and regulations, etc.) of a domain related to the project. By way of an example, when the project corresponds to a passenger car (e.g., a sedan, a hatchback, or a Sport Utility Vehicle (SUV)), the domain may be on-highway vehicles. Similarly, when the project corresponds to an All Terrain Vehicle (ATV) or a Utility Task Vehicle (UTV), the domain may be off-highway vehicles. The generic domain data 220 may be provided by domain experts (e.g., a subject matter expert in automobiles).

The MBD guidelines data 224 may include generic MBD guidelines data and user-specific MBD guidelines data. The MBD guidelines data 224 may include guidelines for systematic use of models or MBD tools throughout the process of development. The generic MBD guidelines data may be provided by MBD experts (i.e., personnel proficient in use of MBD tools). The user-specific MBD guidelines data may be provided by the user or the client.

The embedding module 202 may include an embedding model (such as Word2Vec, Continuous Bag of Words (CBOW), Skip-Gram model, GloVe, Fasttext, Bidirectional Encoder Representations from Transformers (BERT), ROBERTa, etc.). Further, the embedding module 202, via the embedding model, may create an SKC and a DKC from the generic domain data 220, the project specific data 222, and the MBD guidelines data 224. The SKC may include static data embeddings obtained from the generic domain data 220 and the generic MBD guidelines from the MBD guidelines data 224. The DKC may include dynamic data embeddings obtained from the project-specific data 222 and the user-specific MBD guideline data. To create the SKC, the embedding module 202 may generate, via the embedding model, a plurality of SKC embeddings from the generic domain data 220 and the generic MBD guidelines data 224 to obtain the SKC. Additionally, to create the DKC, the embedding module 202 may generate, via the embedding model, a plurality of DKC embeddings from the project-specific data 222 and the user-specific MBD guidelines data to obtain the DKC. It should be noted that the embedding module 202 may apply a chunking and tokenization algorithm to input data prior to using the embedding model to generate the respective embeddings. The chunking and tokenization algorithm may transform the input data into data chunks, and subsequently into tokens which can then be processed by the embedding model to generate the respective embeddings.

Additionally, the user may provide a user input via a user interface on a user device. The user input may be in form of a prompt including a plurality of requirements. The plurality of requirements may correspond to user requirements for a simulation model to be generated related to the project. The embedding module 202 may receive the user input. Further, the embedding module 202 may identify the plurality of requirements from the user input using the DKC. Further, the embedding module 202 may generate, via the embedding model, a plurality of requirement embeddings corresponding to the plurality of requirements. It should be noted that the embedding module 202 may store the plurality of requirement embeddings, and the SKC, and the DKC in the database 216.

The interface list generating module 204 may retrieve the plurality of requirement embeddings, the SKC, and the DKC from the database 216. The interface list generating module 204 may then generate, via the LLM 218 stored in the data storage 214, an interface list corresponding to each of the plurality of requirements using the SKC and the DKC. It should be noted that an interface may define properties of inputs and outputs for components of the simulation model to be generated. To generate the interface list, the interface list generating module 204 may compare each of the plurality of requirement embeddings with the SKC using a first similarity metric (such as cosine similarity, Euclidean distance, semantic similarity, etc.). In other words, the first similarity metric may be based on similarity between the plurality of requirement embeddings and the static data embeddings stored in the SKC. Based on the first similarity metric, the interface list generating module 204 may identify a set of sample interfaces corresponding to each of the plurality of requirements.

Further, the interface list generating module 204 may input an interface identification prompt for each of the plurality of requirement embeddings to the LLM 218. The interface identification prompt may include the set of sample interfaces and a corresponding requirement embedding. Based on the interface identification prompt, the interface list generating module 204 may iteratively generate, via the LLM 218, the interface list. An interface list may be generated for each requirement. The interface list generating module 204 may post-process, via the LLM 218, the interface list based on a user feedback. Based on the user feedback, the interface list generating module 204 may either remove the interface or retain the interface from the interface list. The interface list generating module 204 may then send the post-processed interface list to the embedding module 202. Further, the embedding module 202 may iteratively generate, via the embedding model, a plurality of interface embeddings from the interface list to obtain an Interface List Corpus (ILC). The ILC may be stored in the database 216.

Further, the pseudo code generating module 206 may generate a pseudo code corresponding to each of the plurality of requirements using the interface list and the SKC. To generate the pseudo code, the pseudo code generating module 206 may compare each of the plurality of requirement embeddings with the ILC and the SKC using a second similarity metric (such as cosine similarity, Euclidean distance, semantic similarity, etc.). In other words, the second similarity metric may include similarity between the plurality of requirement embeddings, the ILC, and the SKC. Based on the second similarity metric, the pseudo code generating module 206 may identify a sample pseudo code corresponding to each of the plurality of requirements. Further, the pseudo code generating module 206 may input a pseudo code generation prompt for each of the plurality of requirement embeddings to the LLM 218. The pseudo code generation prompt includes the sample pseudo code and a corresponding requirement. Based on the pseudo code generation prompt, the pseudo code generating module 206 may iteratively generate, via the LLM 218, the pseudo code for each requirement. Further, the pseudo code generating module 206 may send the pseudo code to the embedding module 202. The embedding module 202 may generate, via the embedding model, a plurality of pseudo code embeddings from the pseudo code to obtain a Pseudo Code Corpus (PCC). The PCC may be stored in the database 216. It should be noted that the database 216 may be a single database or a group of databases, each individually storing each of the SKC, the DKC, the ILC, and the PCC.

Further, for each of the plurality of requirements, the consolidating module 208 may add the corresponding interface list and the corresponding pseudo code to a configuration file. In other words, the configuration file may include the plurality of requirements, and the interface list and the pseudo code corresponding to the plurality of requirements. The configuration file may be in a format of markup language (for example, Yet Another Markup Language (YML), Extensible Markup Language (XML), Hypertext Markup Language (HTML), or the like). Further, the consolidating module 208 may send the configuration file to the script generating module 210. Based on the configuration file, the script generating module 210 may generate a script 226 for simulation model development. The script generating module 210 may generate the script 226 via the LLM 218 based on the pseudo code for each of the plurality of requirements. The script 226 may then be executed to develop the simulation model through an MBD tool. Thus, the simulation model may be obtained in accordance with the plurality of requirements provided by the user.

In an embodiment, the fine-tuning module 212 may fine-tune the LLM 218 based on the project-specific data 222 and the generic domain data 220 using an adapter-based Parameter Efficient Fine-Tuning (PEFT) technique through project-specific adapter layers and generic domain adapter layers. Further, the fine-tuning module 212 may fine-tune the LLM 218 based on the generic MBD guidelines data and the user-specific MBD guidelines adapter layers and user-specific MBD guidelines adapter layers.

It should be noted that all such aforementioned modules 202 - 212 may be represented as a single module or a combination of different modules. Further, as will be appreciated by those skilled in the art, each of the modules 202 - 212 may reside, in whole or in parts, on one device or multiple devices in communication with each other. In some embodiments, each of the modules 202 - 212 may be implemented as dedicated hardware circuit comprising custom application-specific integrated circuit (ASIC) or gate arrays, off-the-shelf semiconductors such as logic chips, transistors, or other discrete components. Each of the modules 202 - 212 may also be implemented in a programmable hardware device such as a field programmable gate array (FPGA), programmable array logic, programmable logic device, and so forth. Alternatively, each of the modules 202 - 212 may be implemented in software for execution by various types of processors (e.g., processor 104). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for generating scripts for simulation model development. For example, the exemplary system 100 and the associated computing device 102 may generate scripts for simulation model development by the processes discussed herein. In particular, as will be appreciated by those of ordinary skill in the art, control logic and/or automated routines for performing the techniques and steps described herein may be implemented by the system 100 and the associated computing device 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

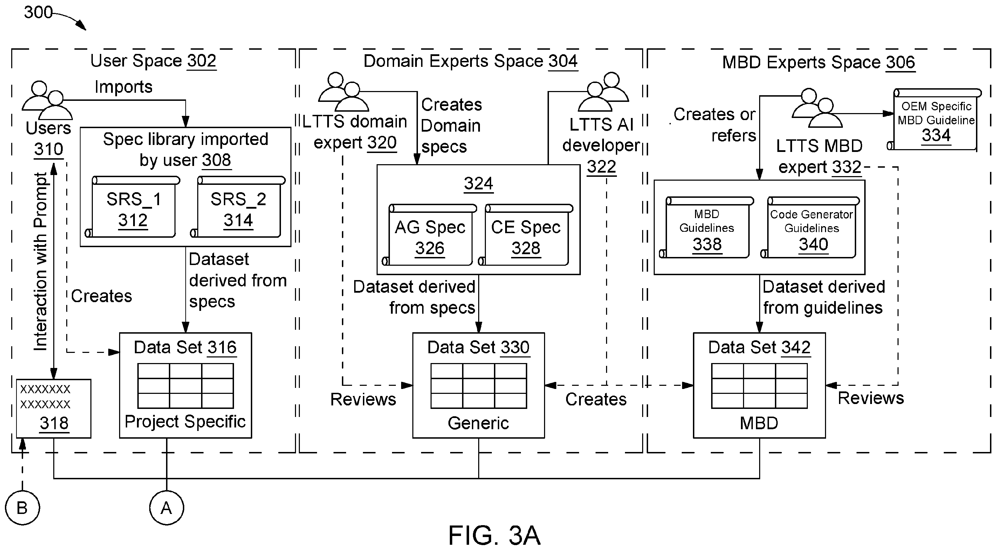

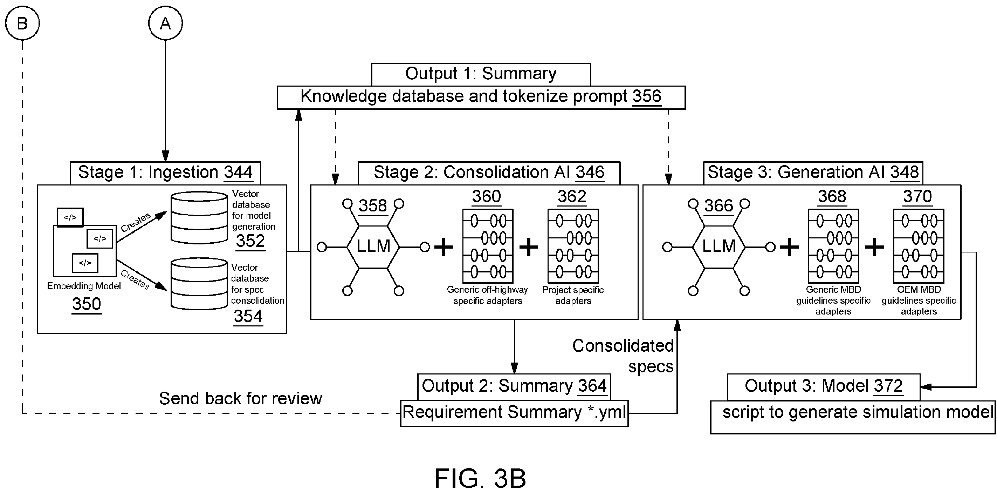

Referring now to FIGS. 3A, 3B, a high-level architecture 300 of an exemplary system for generating scripts for simulation model development is illustrated, in accordance with an embodiment. FIGS. 3A, 3B are explained in conjunction with FIGS. 1 and 2. The architecture 300 may be implemented by the computing device 102 of the system 100. The architecture 300 may include a user space 302, a domain expert space 304, and an MBD expert space 306. The user space 302 may include a user specification library 308 imported by a user 310 (for example, a representative or a team from an automobile company). The user specification library 308 may include a first Software Requirements Specifications (SRS_1) 312, a second SRS (SRS_2) 314, and so on. Further, the user 310 may create a project specific data set 316 based on a dataset derived from the user specification library 308. Additionally, the user 310 may interact with a user interface to provide a user requirement prompt including the user requirements 318.

The domain expert space 304 may be operated by a domain expert 320 (for example, an off-highway vehicles industry expert) and an Artificial Intelligence (AI) developer 322. The domain expert 320 may create a domain specification library 324. The domain specification library 324 may include a specification A 326, a specification B 328, and so on. The AI developer 322 may use the domain specification 324 to create a generic data set 330. The generic data set 330 may be based on a dataset derived from the domain specification library 324. Additionally, the domain expert 320 may review the generic data set 330.

The MBD experts space 306 may be operated by an MBD expert 332. The MBD expert 332 may use an Original Equipment Manufacturer (OEM) specific MBD guidelines 334 to create code generator guidelines 336. Further, the MBD expert 332 may create or refer to MBD guidelines 338. The AI developer 322 may create an MBD dataset 342 and the MBD expert 332 may review the MBD dataset 342.

Further, the architecture 300 may be implemented in three stages. The first stage may be an ingestion stage 344. The second stage may be a consolidation AI stage 346. The third stage may be a generation AI stage 348.

The ingestion stage 344 may be implemented in three stages of development of the architecture 300. The first stage may be a training phase (i.e., prior to deployment of the architecture 300). The second stage may be a deployment phase training (i.e., training upon deployment of the architecture 300). The third stage may be a deployment phase prompt completion (i.e., implementation of the architecture 300 upon deployment). For implementing the ingestion stage 344 in the training phase, the generic dataset 330 (e.g., a generic off-highway knowledge dataset), and the MBD dataset 342 may be received as an input by an embedding model 350. The embedding model 352 may then create the SKC 352from the input received. The SKC 352 may include embeddings generated from the generic dataset 330 and generic MBD guidelines data from the MBD dataset 342.

During the deployment training phase, the plurality of user requirements 318 may be received from the UI. The embedding model 350 may generate a plurality of requirement embeddings from the plurality of user requirements 318. The plurality of requirement embeddings may be stored in a DKC 354. This may enable dynamically adding user input data to the DKC 354. During the deployment phase prompt completion, the project specific dataset 316 (e.g., dataset for ATVs from an automobile manufacturer) may be received by the embedding model 350 to generate a plurality of project-specific data embeddings. The plurality of project-specific data embeddings may be stored in the DKC 354. Thus, the DKC 354 may include embeddings generated from the project specific dataset 316 and user-specific MBD guidelines data from the MBD dataset 342.

The output from the ingestion stage 344 may include a first summary 356. The first summary 356 may include knowledge databases (i.e., the SKC 352 and the DKC 354) and a tokenized prompt (i.e., the plurality of requirement embeddings). The first summary 356 may be further used in the consolidation AI stage 346 to generate a consolidated specification. In an embodiment, the consolidated specification may include a unique format. The consolidated specification may specifically dictate classification of data from specification into plurality of matrix buckets. The plurality of matrix buckets may include a protocol matrix, a logic matrix, an interface matrix, a state machine matrix, and section interlinking matrix. The generated plurality of matrix buckets and the co-relation of the plurality of matrix buckets with each other may be used in the setup of LLM to generate a component model and code generation settings.

Further, the architecture 300 may include a first LLM 358. During the training phase, generic domain adapters 360 may be obtained from the SKC 352 generated in the ingestion stage 344. For implementing the consolidation AI stage 346 in the training phase, the first LLM 358 may be trained/fine-tuned using the generic domain adapters 360 (for example, generic off-highway specific adapters) through an adapter-based Parameter Efficient Fine-Tuning (PEFT) technique by adding generic domain adapter layers to the first LLM 358.

During the deployment phase training, project-specific domain adapters 362 may be obtained from the project-specific dataset 316 generated in the ingestion stage 344. For implementing the consolidation AI stage 346 in the deployment phase training, the first LLM 358 may be trained/fine-tuned using the project specific domain adapters 362 (for example, ATV manufacturer specific adapters) through the adapter-based PEFT technique by adding project specific adapter layers to the first LLM 358.

During the deployment phase prompt completion stage, the fine-tuned first LLM 358 may generate consolidated summary 364 based on selected adapter combinations (either the generic domain adapters 360 or the project-specific adapters 362 or both). The consolidated summary 364 may be consolidation of specifications (i.e., user requirements 318) prompted by the user 310 either through simple prompts or through document retrievals.

The output of the consolidation AI stage 346 may be the consolidated summary 364. It should be noted that the consolidated summary 364 may include the consolidated requirements in a configuration file (in a markup language format (for example, YML, XML, HTML, etc.)). The consolidated summary 364 may be sent back for review as per the user requirements 318. The architecture 300 may include a second LLM 366. The consolidated summary 364 may be used by the second LLM 366 to generate models and code generation settings.

Further, during the training phase in the ingestion stage 344, generic MBD guidelines adapters 368 may be created from the generic MBD guidelines data. During the training phase in the generation AI stage 348, the second LLM 366 may be trained/fine-tuned using the generic MBD guidelines adapters 368 through the adapter-based PEFT technique by adding generic MBD guidelines adapter layers to the second LLM 366.

During the deployment phase training in the ingestion stage 344, user-specific MBD guidelines adapters 370 may be created from the user-specific MBD guidelines data. During the deployment phase training in the generation AI stage 348, the second LLM 366 may be trained/fine-tuned using the user-specific MBD guidelines adapters 370 through the adapter-based PEFT technique by adding user-specific MBD guidelines adapter layers to the second LLM 366.

During the deployment phase prompt completion in the generation AI stage 348, the fine-tuned second LLM 366 may receive the configuration file (including consolidated summary 364) as an input. The second LLM 366 may generate a script 372 (for example, an MScript) for simulation model development based on selected adapter combinations (either user-specific MBD guidelines adapters or generic MBD guidelines adapters or both). The script 372 may be executed to generate a model through an MBD tool. The model may correspond to the software component or subsystem specified in the consolidated summary 364. The generated model may be complaint to selected user-specific MBD guidelines and generic MBD guidelines.

In an embodiment, the first LLM 358 and the second LLM 366 may be same. The first LLM 358 and the second LLM 366 may be analogous to the LLM 218.

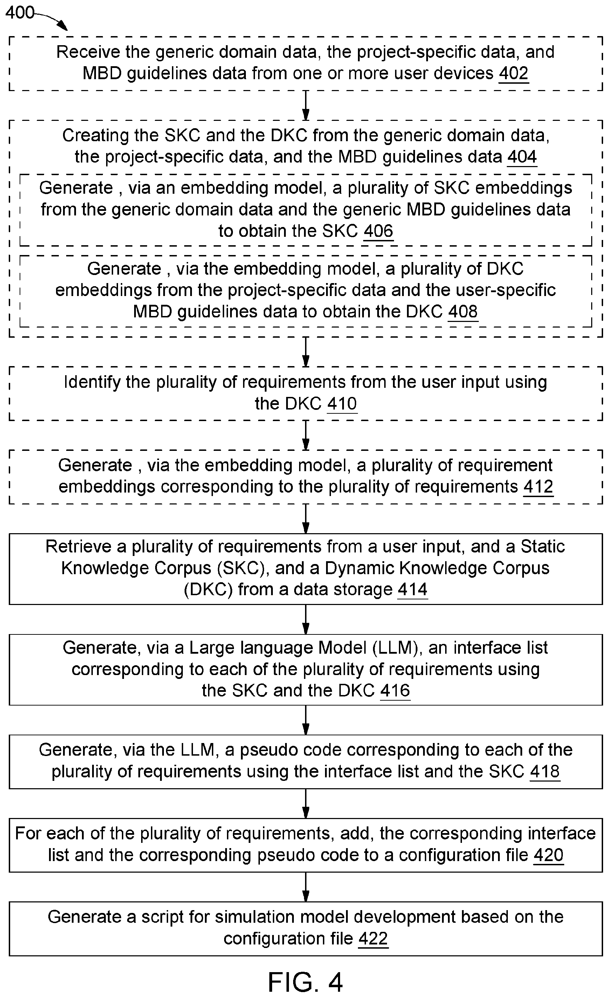

Referring now to FIG. 4, an exemplary process 400 for generating scripts for simulation model development is illustrated, in accordance with an embodiment. FIG. 4 is explained in conjunction with FIGS. 1-3A, 3B. The process 400 may be implemented by the computing device 102 of the system 100. The process 400 may include receiving generic domain data (for example, the generic domain data 220), a project-specific data (for example, the project-specific data 222), and an MBD guidelines data (for example, the MBD guidelines data 224) from one or more user devices, at step 402. The MBD guidelines data may include the generic MBD guidelines data and the user-specific MBD guidelines data.

Further, the process 400 may include creating the SKC (for example, the SKC 352) and the DKC (for example, the DKC 354) from the generic domain data, the project-specific data, and the MBD guidelines data, at step 404. To create the SKC and the DKC, the step 404 of the process 400 may include generating, via an embedding model (for example, the embedding model 350), a plurality of SKC embeddings from the generic domain data and the generic MBD guidelines data to obtain the SKC, at step 406. The SKC is based on the generic domain data and the MBD guidelines data. Further, the step 404 of the process 400 may include generating, via the embedding model, a plurality of DKC embeddings from the project-specific data and the user-specific MBD guidelines data to obtain the DKC, at step 408. The DKC may be based on project-specific data and user-specific MBD guidelines data. By way of an example, the embedding module 202 may receive the generic domain data 220, the project specific data 222, and the MBD guidelines data 224 from one or more user devices. Further, the embedding module 202 may create the SKC 352 and the DKC 354 from the generic domain data 220, the project specific data 222, and the MBD guidelines data 224. The embedding module 202 may generate, via the embedding model, a plurality of SKC embeddings from the generic domain data 220 and the generic MBD guidelines data to obtain the SKC 352. The embedding module 202 may generate a plurality of DKC embeddings from the project specific data 222 and the user-specific MBD guidelines data to obtain the DKC 354.

Once the SKC and the DKC are generated, the process 400 may include identifying the plurality of requirements from the user input using the DKC, at step 410. Further, the process 400 may include generating, via the embedding model, a plurality of requirement embeddings corresponding to the plurality of requirements, at step 412. The process 400 may include retrieving the plurality of requirements from a user input, and the SKC, and the DKC from a data storage (for example, the data storage 214), at step 414. Each of the SKC and the DKC is a vector database. In continuation of the example, the embedding module 202 may identify the plurality of requirements from the user input using the DKC 354. The embedding module 202 may generate, via the embedding model, the plurality of requirement embeddings corresponding to the plurality of requirements. The embedding module 202 may retrieve the plurality of requirements from the user input, the SKC 352, and the DKC 354 from the data storage 214.

Further, the process 400 may include generating, via an LLM (for example, the LLM 218), an interface list corresponding to each of the plurality of requirements using the SKC and the DKC, at step 416. In some embodiments, the process 400 may include fine-tuning the LLM based on the project-specific data and the generic domain data using an adapter-based PEFT technique through project-specific adapter layers (for example, the project-specific adapters 362) and generic domain adapter layers (for example, the generic domain adapters 360). Further, the process 400 may also include fine-tuning the LLM based on the generic MBD guidelines data and the user-specific MBD guidelines data using an adapter-based PEFT technique through generic MBD guidelines adapter layers (for example, the generic MBD guidelines adapter layers 368) and user-specific MBD guidelines adapter layers (for example, the user-specific MBD guidelines adapter layers 370).

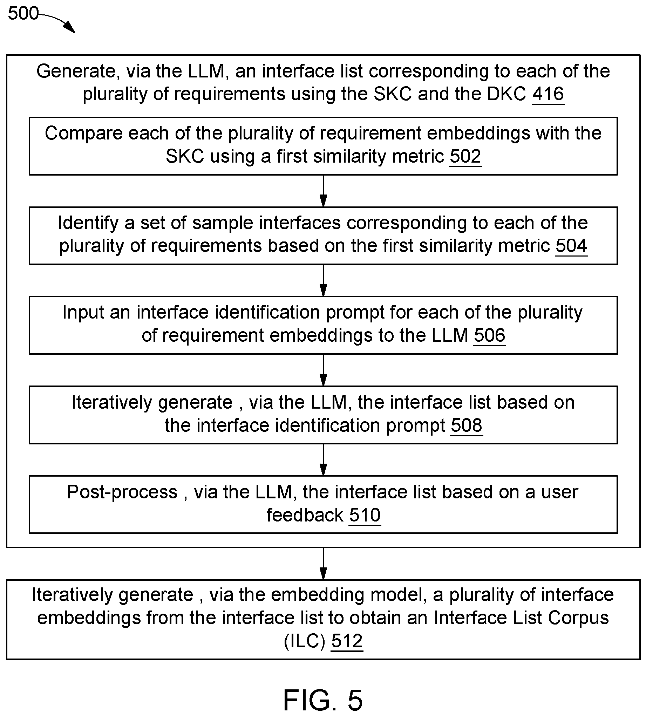

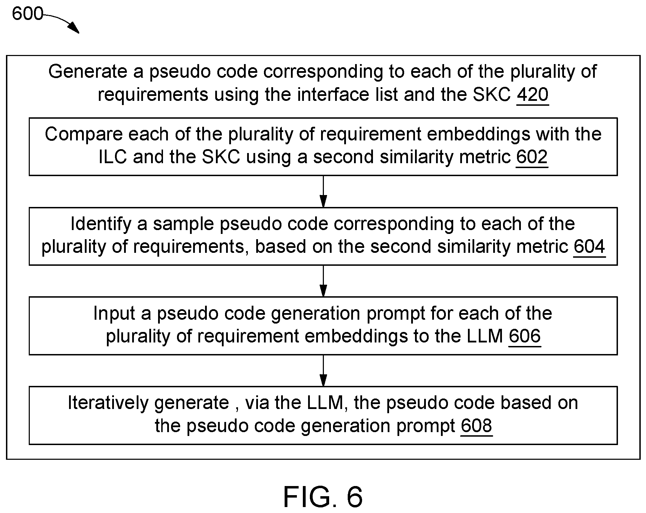

Further, the generation of the interface list is explained in greater detail in conjunction with FIG. 5. The process 400 may include generating, via the LLM, a pseudo code corresponding to each of the plurality of requirements using the interface list and the SKC, at step 418. The generating of the pseudo code is explained in greater detail in conjunction with FIG. 6. For each of the plurality of requirements, the process 400 may include adding the corresponding interface list and the corresponding pseudo code to a configuration file, at step 420. Further, the process 400 may include generating a script (for example, the script 226) for simulation model development based on the configuration file, at step 422.

In continuation of the above example, the interface list generating module 204 may generate, via the LLM 218, the interface list corresponding to each of the plurality of requirements using the SKC 352 and the DKC 354. In some embodiments, the fine tuning module 212 may fine-tune the LLM 218 based on the project-specific data 222 and the generic domain data 220 using an adapter-based PEFT technique through project-specific adapter 360 and generic domain adapter layers 362. Additionally, the fine-tuning module 212 may fine-tune the LLM 218 based on the generic MBD guidelines data 224 and the user-specific MBD guidelines data using an adapter-based PEFT technique through generic MBD guidelines adapter layers 368 and user-specific MBD guidelines adapter layers 370.The pseudo code generating module 206 may generate, via the LLM 218, the pseudo code corresponding to each of the plurality of requirements using the interface list and the SKC 352. For each of the plurality of requirements, the consolidating module 208 may add the corresponding interface list and the corresponding pseudo code to a configuration file. The script generating module 210 may generate the script 226 for simulation model development based on the configuration file.

Referring now to FIG. 5, an exemplary process 500 for generating a plurality of interface embeddings from the interface list to obtain an ILC is illustrated via a flowchart, in accordance with some embodiments. FIG. 5 is explained in conjunction with FIGS. 1, 2, 3A, 3B, and 4. The process 500 may be implemented by the computing device 102 of the system 100. The process 500 may include generating, via an LLM (for example, the LLM 218), an interface list corresponding to each of the plurality of requirements using the SKC and the DKC, at step 416. The process 500 may include comparing each of the plurality of requirement embeddings with the SKC using a first similarity metric, at step 502. The process 500 may include identifying a set of sample interfaces corresponding to each of the plurality of requirements based on the first similarity metric, at step 504. Further the process 500 may include inputting an interface identification prompt for each of the plurality of requirement embeddings to the LLM, at step 506. The interface identification prompt may include the set of sample interfaces and a corresponding requirement embedding, at step 508. The process 500 may include post-processing, via the LLM, the interface list based on a user feedback, at step 510. Finally, the process 500 may include iteratively generating, via the embedding model, a plurality of interface embeddings from the interface list to obtain an ILC, at step 512. By way of an example, the interface list generating module 204 may compare each of the plurality of requirement embeddings with the SKC 352 using a first similarity metric. Further, the interface list generating module 204 may input the interface identification prompt for each of the plurality of requirement embeddings to the LLM. Further, the interface list generating module 204 may iteratively generate, via the LLM 218, the interface list based on the interface identification prompt. Further, interface list generating module 204 may post-process, via the LLM 218, the interface list based on the user feedback. Finally, the embedding module 202 may iteratively generate, via the embedding model, a plurality of interface embeddings from the interface list to obtain an ILC.

Referring now to FIG. 6, an exemplary process 600 for generating a pseudo code is illustrated via a flow chart, in accordance with some embodiments. FIG. 6 is explained in conjunction with FIGS. 1, 2, 3A, 3B, 4, and 5. In an embodiment, the process 600 may be implemented by the computing device 102. The process 600 may include generating, via the LLM (for example, the LLM 218), the pseudo code corresponding to each of the plurality of requirements using the interface list and the SKC, at step 420. The step 420 of the process 600 may include comparing each of the plurality of requirement embeddings with the ILC and the SKC using a second similarity metric, at step 602. Further, the step 420 of the process 600 may include identifying a sample pseudo code corresponding to each of the plurality of requirements, based on the second similarity metric, at step 604. Further, the step 420 of the process 600 may include inputting a pseudo code generation prompt for each of the plurality of requirement embeddings to the LLM, at step 606. The pseudo code generation prompt may include the sample pseudo code and a corresponding requirement. The step 420 of the process 600 may include iteratively generating, via the LLM, the pseudo code based on the pseudo code generation prompt, at step 608. By way of an example, the pseudo code generating module 206 may compare each of the plurality of requirement embeddings with the ILC and the SKC 352 using a second similarity metric. Further, based on the second similarity metric, the pseudo code generating module 206 may identify the sample pseudo code corresponding to each of the plurality of requirements. Further, the pseudo code generating module 206 may input the pseudo code generation prompt for each of the plurality of requirement embeddings to the LLM 218. Finally, the pseudo code generating module 206 may iteratively generate, via the LLM 218, the pseudo code based on the pseudo code generation prompt.

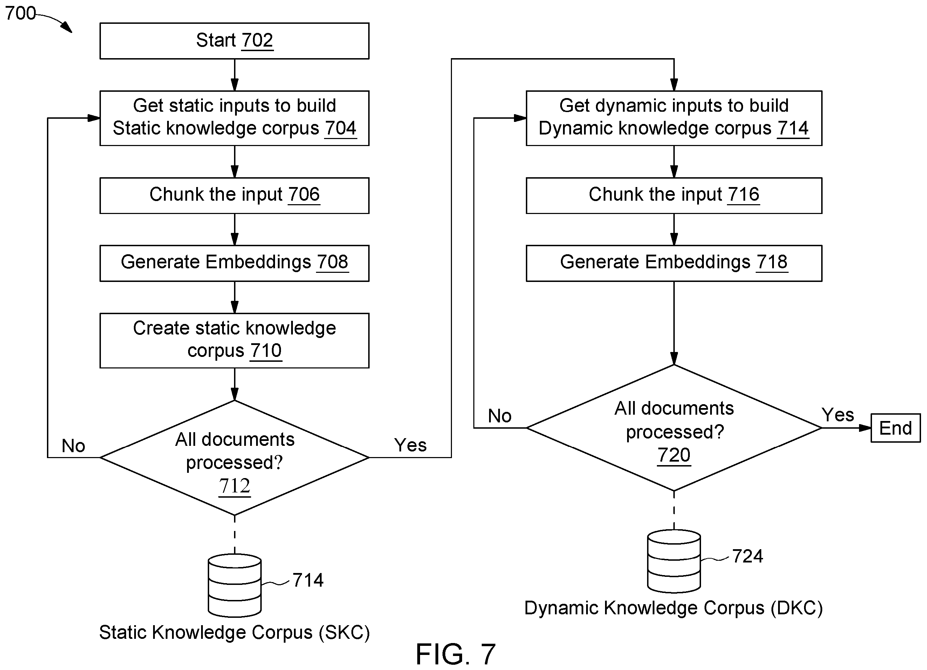

Referring now to FIG. 7, a detailed exemplary process 700 for generating an SKC and a DKC, in accordance with an embodiment. FIG. 7 is explained in conjunction with FIGS. 1, 2, 3A, 3B, 4, 5, and 6. The process 700 may be implemented by the computing device 102 of the system 100. The process 700 may be initiated by the embedding module (for example, the embedding module 202), at step 702. The process 700 may include getting, by the embedding module, static input data to build the SKC. It should be noted that the SKC may be analogous to the SKC 352. The static input data may include generic domain data (for example, the generic domain data 220) and generic MBD guidelines data, at step 704.

Further, the process 700 may include chunking, by the embedding module, the static input data to obtain static input chunked data, at step 706. Further, the process 700 may include generating, by the embedding module, embeddings of the static input chunked data to obtain a plurality of SKC embeddings, at step 708. Further, the process 700 may include checking, by the embedding module, whether the plurality of SKC embeddings are generated for each of the static input data, at step 710. If the plurality of SKC embeddings are not generated for each of the static input data, the process 700 may include iteratively repeating the steps 702-710 until the plurality of SKC embeddings are generated for each of the static input data. The plurality of SKC embeddings may then be stored in an SKC 712. It should be noted that the SKC may be a vector database for generation of the simulation model.

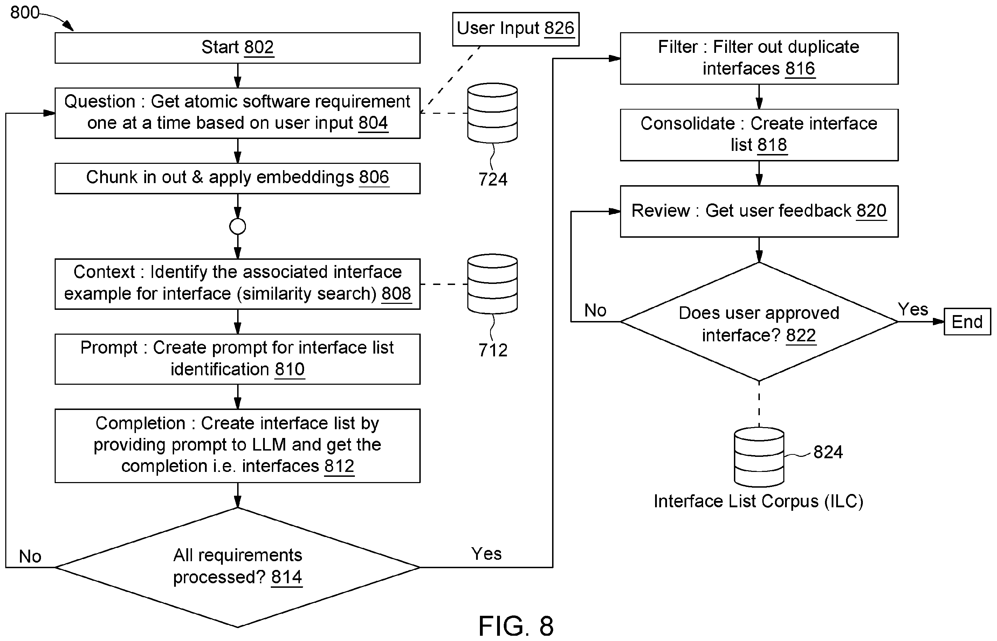

Once the SKC is generated, the process 700 may include getting, by the embedding module, dynamic input data to build the DKC, at step 714. It should be noted that the DKC may be analogous to the DKC 354.The dynamic input data may include project specific data (for example, the project specific data 222) and user-specific MBD guidelines data. Further, the process 700 may include chunking, by the embedding module, the dynamic input data to obtain dynamic input chunked data, at step 716. Further, the process 700 may include generating, by the embedding module, embeddings of the dynamic input chunked data to obtain plurality of DKC embeddings, at step 718. Further, the process 700 may include checking, by the embedding module, whether the plurality of DKC embeddings are generated for each of the dynamic input data, at step 720. If the plurality of DKC embeddings is not generated for each of the dynamic input data, the process 700 may include iteratively repeating the step 714-720 the plurality of DKC embeddings are generated for each of the dynamic input data. The plurality of DKC embeddings may then be stored in a DKC 722. It should be noted that the DKC 722 may be a vector database for consolidation of specification. Once the dynamic input is processed completely, the process 700 may include sending, by the embedding module, the generated SKC 712 and the generated DKC 722 for further processing (explained in detail in conjunction with FIGS. 8, 9, 10, and 11).

Referring now to FIG. 8, an exemplary process 800 for generating an ILC is illustrated via a flowchart, in accordance with an embodiment. FIG. 8 is explained in conjunction with FIGS. 1, 2, 3A, 3B, 4, 5, 6, and 7. The process 800 may be implemented by the computing device 102 of the system 100. It may be noted that the process 800 may be implemented in continuation with the process 700. Once the DKC is generated, the process 800 may be initiated by the interface list generating module (for example, the interface list generating module 204), at step 802. The process 800 may include getting, by the interface list generating module, atomic software requirements (i.e., each requirement of the plurality of requirements) based on a user input and a DKC (e.g., the DKC 722), at step 804. The user input may include keywords to identify the plurality of requirements, naming conventions, or the like. Further, the process 800 may include chunking, by the embedding module (for example, the embedding module 202), the requirement to obtain chunked requirement data and further generating, by the embedding module, embedding of the chunked requirement data to obtain requirement embeddings, at step 806. Further, the process 800 may include identifying, by the interface list generating module, a set of sample interfaces corresponding to each of the requirements, at step 808. It should be noted that to identify the set of sample interfaces, the process 800 may additionally include comparing, by the interface list generation module, the plurality of requirement embeddings with the SKC (for example, the SKC 712) using a first similarity metric.

Further, the process 800 may include creating, by the interface list generating module, an interface list identification prompt (referred to as "interface identification prompt" hereon), at step 810. Further, the process 800 may include providing, by the interface list generating module, the interface identification prompt to the LLM (for example, the LLM 218) and creating, by the interface list generating module 204 an interface list based on the interface identification prompt, at step 812. Further, the process 800 may include checking, by the interface list generation module, whether the interface list is created for each of the plurality of requirements, at step 814. If the interface list is not created for each of the plurality of requirements, the process 800 may include iteratively repeating the steps 804-814. Once the interface list is created for each of the plurality of requirements, the process 800 may include filtering, by the interface list generation module, out duplicate interfaces from the generated interface list, at step 816. Further, the process 800 may include creating, by the interface list generation module, a filtered interface list based on the plurality of requirements, at step 818.

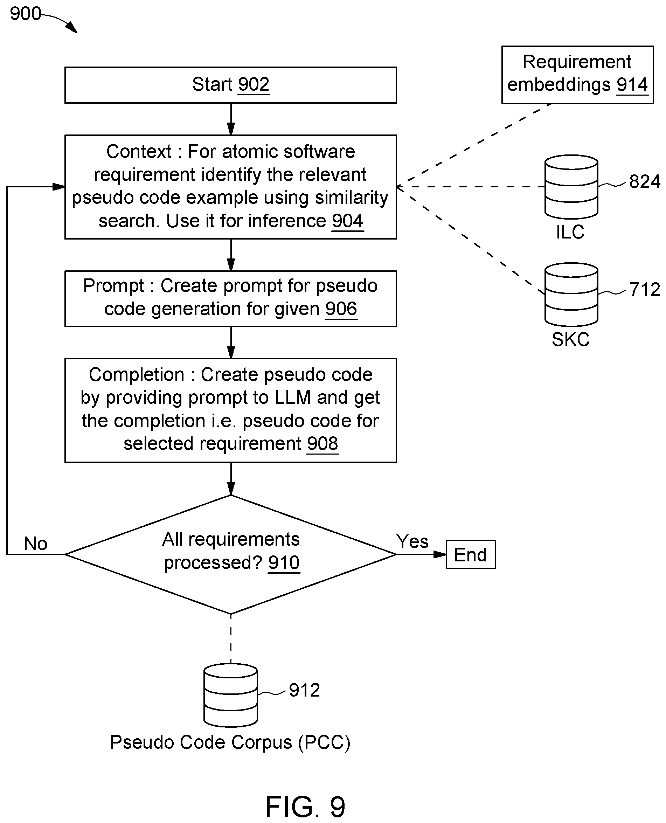

Once the filtered interface list is created, the process 800 may include getting, by the interface list generation module, a user feedback, at step 820. Further, the process 800 may include checking, by the interface list generation module, whether a user approves the filtered interface list, at step 822. If the user does not approve the filtered interface list, the process 800 may include iteratively repeating the step 820-822 until the user approves the filtered interface list. The interface list corresponding to each of the plurality of requirements may be added to an ILC 824. Once all the interfaces are approved, the process 800 may include sending, by the interface list generating module, the ILC 824 for further processing (explained in detail in conjunction with FIGS. 9, 10, and 11).

Referring now to FIG. 9, a detailed exemplary process 900 for generating a PCC is illustrated via a flowchart, in accordance with an embodiment. FIG. 9 is explained in conjunction with FIGS. 1, 2, 3A, 3B, 4, 5, 6, 7, and 8. The process 900 may be implemented by the computing device 102 of the system 100. It may be noted that the process 900 may be implemented in continuation with the process 800. Once the ILC is generated, the process 900 may be initiated by a pseudo code generating module (for example, the pseudo code generating module 206), at step 902. Further, for each of the plurality of requirements, the process 900 may include identifying, by the pseudo code generating module, a sample pseudo code for atomic software requirements (i.e., each requirement of the plurality of requirements), at step 904. It should be noted that to identify the sample pseudo code, the process 900 may compare each of the plurality of requirement embeddings with the ILC (e.g., the ILC 824), and the SKC (e.g., the SKC 712). Based on the comparison, the process 900 may identify the sample pseudo code. Further, the process 900 may include creating, by the pseudo code generating module, a pseudo code generation prompt for each of the plurality of requirement embeddings, at step 906.

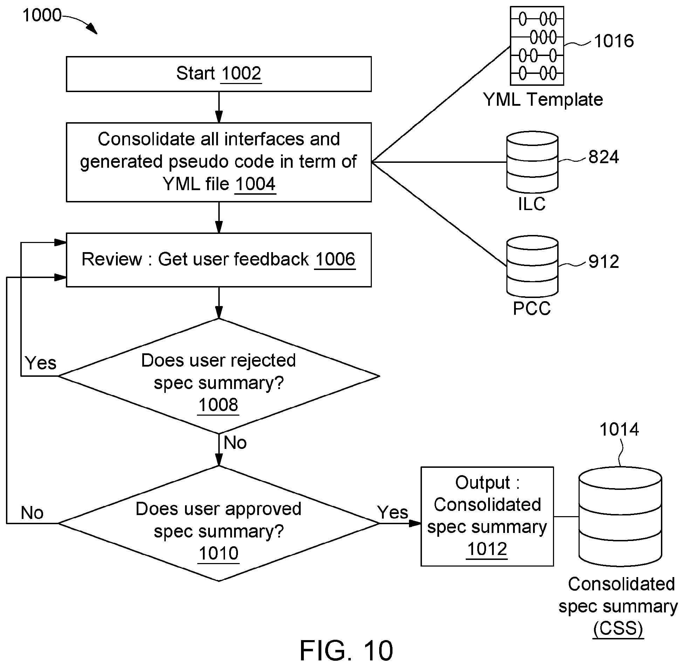

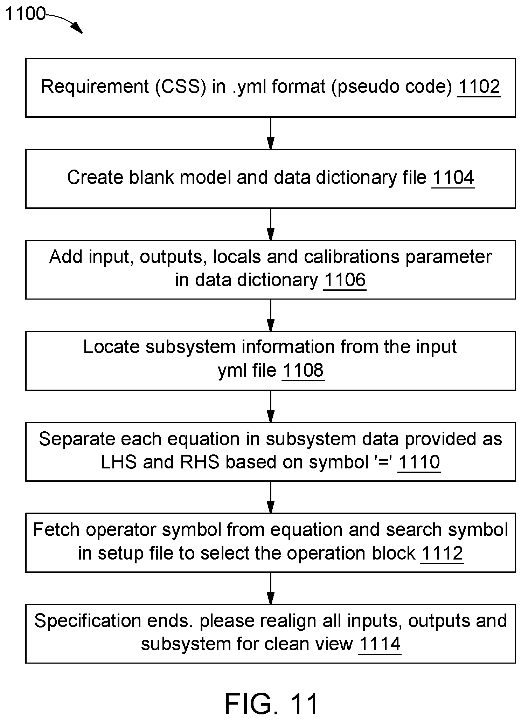

Further, the process 900 may include providing, by the pseudo code generating module, the pseudo code generation prompt to the LLM (for example, the LLM 218) and further creating, by the pseudo code generating module, a pseudo code for the selected requirement, at step 908. Further, the process 900 may include checking, by the pseudo code generating module, whether the pseudo code is created for each of the plurality of requirements, at step 910. If the pseudo code for each of the plurality of requirements is not generated, the process 900 may include iteratively repeating the step 904-910 until the pseudo code for each of the plurality of requirements is generated. The pseudo code for each of the plurality of requirements may be stored in a PCC 912. Further, the process 900 may include sending, by the pseudo code generating module, the PCC 912 for further processing (explained in greater detail in conjunction with FIGS. 10, and 11)

Referring now to FIG. 10, an exemplary process 1000 for generating a Consolidated Specification Summary (CSS) is illustrated via a flowchart, in accordance with an embodiment. FIG. 10 is explained in conjunction with FIGS. 1-9. The CSS may be analogous to the consolidated summary 364. The process 1000 may be implemented by the computing device 102 of the system 100. It may be noted that the process 1000 may be implemented in continuation with the process 900. Once the PCC is generated, the process 1000 may be initiated, at step 1002. Further, the process 1000 may include, consolidating, by the consolidating module (for example, the consolidating module 208) the generated interface list and the pseudo code in terms of a configuration file (in a mark-up language format (e.g., YML, XML, HTML, etc.)) to obtain a specification summary, at step 1004. It should be noted that the consolidation may be based upon a YML template (e.g., the YML template 1016), the ILC (e.g., the ILC 824), and the PCC (e.g., the PCC 912).

Further, the process 1000 may include getting, by the consolidating module, the user feedback, at step 1006. Further, the process 1000 may include checking, by the consolidating module, whether the user has rejected the specification summary, at step 1008. If the user rejects the specification summary, the process 1000 may return to step 1004 to consolidate the interface list and the pseudo code for a next requirement from the plurality of requirements. This ensures that the generated specification summary also undergoes user validation. If the user has not rejected the specification summary at step 1008, the process 1000 may include checking, by the consolidating module, whether the user has approved the specification summary, at step 1010. If the specification summary is not approved (for example, when the user fails to provide any feedback (i.e., neither approves nor rejects)), the process 1000 may return to the step 1006, and steps 1006-1010 may be iteratively performed till the specification summary is either approved or rejected by the user.

Once the specification summary is approved, the process 1000 may include consolidating, by the consolidating module, a CSS 1012, at step 1014. The specification summary of each of the plurality of requirements may be consolidated to obtain the CSS 1012. Further, the process 1000 may include initiating the process for generating model scripts from the CSS 1012. This is explained in greater detail in conjunction with FIG. 11.

Referring now to FIG. 11, an exemplary process 1100 for generating model scripts from consolidated summary is illustrated via a flowchart, in accordance with an embodiment. FIG. 11 is explained in conjunction with FIGS. 1-10. The process 1100 may be implemented by the computing device 102 of the system 100. It may be noted that the process 1100 may be implemented in continuation with the process 1000. The process 1100 may include receiving, by a script generating module (for example, the script generating module 210), the plurality of requirements (in form of a CSS (e.g., the CSS 1012)) in the configuration file, at step 1102. The process 1100 may include creating, by the script generating module, a blank model and a data dictionary file of each of the plurality of requirements, at step 1104. Further, the process 1100 may include adding, by the script generating module, inputs, outputs, locals, and calibrations parameter of the plurality of requirements in data dictionary, at step 1106.

Further, the process 1100 may include locating, by the script generating module, subsystem information from the received configuration file, at step 1108. Further, the process 1100 may include separating, by the script generating module, each equation in subsystem data provided as LHS and RHS based on symbol "=", at step 1110. Further, the process 1100 may include fetching, by the script generating module, operator symbol from equation and search symbol in a setup file (or a reference file) to select the operation block, at step 1112. Further, the process 1100 may include iteratively repeating the steps 1108-1112 until each of the operation symbols from the equations are fetched. Further, the process 1100 may include terminating, by the script generating module, the process when each of the subsystems is processed, at step 1114. The inputs, outputs, and the subsystems may be realigned by the script generation module for a clean view.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

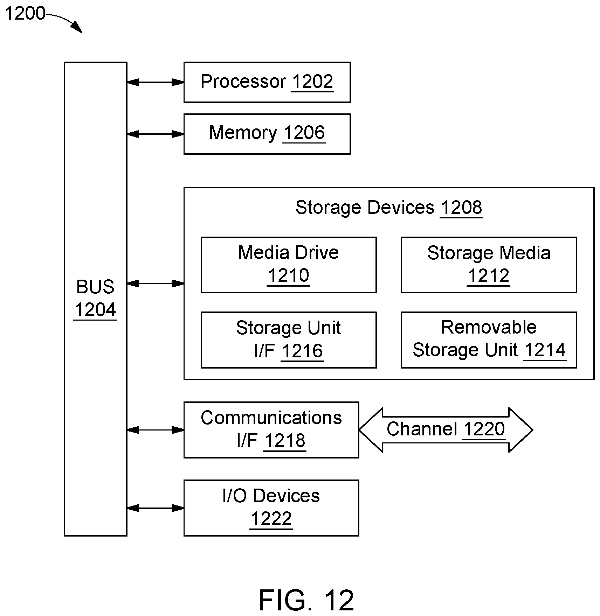

The disclosed methods and systems may be implemented on a conventional or a general-purpose computer system, such as a personal computer (PC) or server computer. Referring now to FIG. 12, an exemplary computing system 1200 that may be employed to implement processing functionality for various embodiments (e.g., as a SIMD device, client device, server device, one or more processors, or the like) is illustrated. Those skilled in the relevant art will also recognize how to implement the invention using other computer systems or architectures. The computing system 1200 may represent, for example, a user device such as a desktop, a laptop, a mobile phone, personal entertainment device, DVR, and so on, or any other type of special or general-purpose computing device as may be desirable or appropriate for a given application or environment. The computing system 1200 may include one or more processors, such as a processor 1202 that may be implemented using a general or special purpose processing engine such as, for example, a microprocessor, microcontroller or other control logic. In this example, the processor 1202 is connected to a bus 1204 or other communication medium. In some embodiments, the processor 1202 may be an Artificial Intelligence (AI) processor, which may be implemented as a Tensor Processing Unit (TPU), or a graphical processor unit, or a custom programmable solution Field-Programmable Gate Array (FPGA).

The computing system 1200 may also include a memory 1206 (main memory), for example, Random Access Memory (RAM) or other dynamic memory, for storing information and instructions to be executed by the processor 1202. The memory 1206 also may be used for storing temporary variables or other intermediate information during execution of instructions to be executed by the processor 1202. The computing system 1200 may likewise include a read only memory ("ROM") or other static storage device coupled to bus 1204 for storing static information and instructions for the processor 1202.

The computing system 1200 may also include a storage devices 1208, which may include, for example, a media drive 1210 and a removable storage interface. The media drive 1210 may include a drive or other mechanism to support fixed or removable storage media, such as a hard disk drive, a floppy disk drive, a magnetic tape drive, an SD card port, a USB port, a micro USB, an optical disk drive, a CD or DVD drive (R or RW), or other removable or fixed media drive. A storage media 1212 may include, for example, a hard disk, magnetic tape, flash drive, or other fixed or removable medium that is read by and written to by the media drive 1210. As these examples illustrate, the storage media 1212 may include a computer-readable storage medium having stored therein particular computer software or data.

In alternative embodiments, the storage devices 1208 may include other similar instrumentalities for allowing computer programs or other instructions or data to be loaded into the computing system 1200. Such instrumentalities may include, for example, a removable storage unit 1214 and a storage unit interface 1216, such as a program cartridge and cartridge interface, a removable memory (for example, a flash memory or other removable memory module) and memory slot, and other removable storage units and interfaces that allow software and data to be transferred from the removable storage unit 1214 to the computing system 1200.

The computing system 1200 may also include a communications interface 1218. The communications interface 1218 may be used to allow software and data to be transferred between the computing system 1200 and external devices. Examples of the communications interface 1218 may include a network interface (such as an Ethernet or other NIC card), a communications port (such as for example, a USB port, a micro USB port), Near field Communication (NFC), etc. Software and data transferred via the communications interface 1218 are in the form of signals which may be electronic, electromagnetic, optical, or other signals capable of being received by the communications interface 1218. These signals are provided to the communications interface 1218 via a channel 1220. The channel 1220 may carry signals and may be implemented using a wireless medium, wire or cable, fiber optics, or other communications medium. Some examples of the channel 1220 may include a phone line, a cellular phone link, an RF link, a Bluetooth link, a network interface, a local or wide area network, and other communications channels.

The computing system 1200 may further include Input/Output (I/O) devices 1222. Examples may include, but are not limited to a display, keypad, microphone, audio speakers, vibrating motor, LED lights, etc. The I/O devices 1222 may receive input from a user and also display an output of the computation performed by the processor 1202. In this document, the terms "computer program product" and "computer-readable medium" may be used generally to refer to media such as, for example, the memory 1206, the storage devices 1208, the removable storage unit 1214, or signal(s) on the channel 1220. These and other forms of computer-readable media may be involved in providing one or more sequences of one or more instructions to the processor 1202 for execution. Such instructions, generally referred to as "computer program code" (which may be grouped in the form of computer programs or other groupings), when executed, enable the computing system 1200 to perform features or functions of embodiments of the present invention.

In an embodiment where the elements are implemented using software, the software may be stored in a computer-readable medium and loaded into the computing system 1200 using, for example, the removable storage unit 1214, the media drive 1210 or the communications interface 1218. The control logic (in this example, software instructions or computer program code), when executed by the processor 1202, causes the processor 1202 to perform the functions of the invention as described herein.

Thus, the disclosed method and system try to overcome the technical problem of generating scripts for simulation model development. The disclosed method and system may retrieve a plurality of requirements from a user input, and a Static Knowledge Corpus (SKC), and a Dynamic Knowledge Corpus (DKC) from a data storage. Each of the SKC and the DKC is a vector database. The SKC is based on generic domain data and generic Model Based Design (MBD) guidelines data. The DKC is based on project-specific data and user-specific MBD guidelines data. The disclosed method and system may further generate, via a Large Language Model (LLM), an interface list corresponding to each of the plurality of requirements using the SKC and the DKC. Further, the disclosed method and system may generate, via the LLM, a pseudo code corresponding to each of the plurality of requirements using the interface list and the SKC. Further, for each of the plurality of requirements, the disclosed method and system may add the corresponding interface list and the corresponding pseudo code to a configuration file. Finally, the disclosed method and system may generate a script for simulation model development based on the configuration file.

As will be appreciated by those skilled in the art, the techniques described in the various embodiments discussed above are not routine, or conventional, or well understood in the art. The techniques may reduce the timeline to 50 to 70%. The techniques may further reduce dependency on tools experts. The techniques may provide guideline enforcement. The techniques may further improve the productivity of model based software development. The techniques may generate behavioral models for off-highway ECU software and component plant model.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for generating scripts for simulation model development. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for generating scripts for simulation model development, the method comprising:
retrieving, by a computing device, a plurality of requirements from a user input, and a Static Knowledge Corpus (SKC), and a Dynamic Knowledge Corpus (DKC) from a data storage, wherein each of the SKC and the DKC is a vector database, wherein the SKC is based on generic domain data and generic Model Based Design (MBD) guidelines data, and wherein the DKC is based on project-specific data and user-specific MBD guidelines data;
generating, by the computing device via a Large Language Model (LLM), an interface list corresponding to each of the plurality of requirements using the SKC and the DKC;
generating, by the computing device via the LLM, a pseudo code corresponding to each of the plurality of requirements using the interface list and the SKC;
for each of the plurality of requirements, adding, by the computing device, the corresponding interface list and the corresponding pseudo code to a configuration file; and
generating, by the computing device, a script for simulation model development based on the configuration file.

2. The method as claimed in claim 1, further comprising, at least one of:
fine-tuning the LLM based on the project-specific data and the generic domain data using an adapter-based Parameter Efficient Fine-Tuning (PEFT) technique through project-specific adapter layers and generic domain adapter layers; and
fine-tuning the LLM based on the generic MBD guidelines data and the user-specific MBD guidelines data using an adapter-based PEFT technique through generic MBD guidelines adapter layers and user-specific MBD guidelines adapter layers.

3. The method as claimed in claim 1, further comprising:
receiving the generic domain data, the project-specific data, and MBD guidelines data from one or more user devices, wherein the MBD guidelines data comprise the generic MBD guidelines data and the user-specific MBD guidelines data; and
creating the SKC and the DKC from the generic domain data, the project-specific data, and the MBD guidelines data, wherein creating comprises:
generating, via an embedding model, a plurality of SKC embeddings from the generic domain data and the generic MBD guidelines data to obtain the SKC; and
generating, via the embedding model, a plurality of DKC embeddings from the project-specific data and the user-specific MBD guidelines data to obtain the DKC.

4. The method as claimed in claim 3, further comprising:
identifying the plurality of requirements from the user input using the DKC; and
generating, via the embedding model, a plurality of requirement embeddings corresponding to the plurality of requirements.

5. The method as claimed in claim 4, wherein generating the interface list comprises:
comparing each of the plurality of requirement embeddings with the SKC using a first similarity metric;
identifying a set of sample interfaces corresponding to each of the plurality of requirements based on the first similarity metric;
inputting an interface identification prompt for each of the plurality of requirement embeddings to the LLM, wherein the interface identification prompt comprises the set of sample interfaces and a corresponding requirement embedding;
iteratively generating, via the LLM, the interface list based on the interface identification prompt; and
post-processing, via the LLM, the interface list based on a user feedback.

6. The method as claimed in claim 5, further comprising iteratively generating, via the embedding model, a plurality of interface embeddings from the interface list to obtain an Interface List Corpus (ILC).

7. The method as claimed in claim 6, wherein generating the pseudo code comprises:
comparing each of the plurality of requirement embeddings with the ILC and the SKC using a second similarity metric;
identifying a sample pseudo code corresponding to each of the plurality of requirements, based on the second similarity metric;
inputting a pseudo code generation prompt for each of the plurality of requirement embeddings to the LLM, wherein the pseudo code generation prompt comprises the sample pseudo code and a corresponding requirement; and
iteratively generating, via the LLM, the pseudo code based on the pseudo code generation prompt.

8. The method as claimed in claim 1, wherein generating the script for simulation model development comprises generating, via the LLM, the script based on the pseudo code for each of the plurality of requirements.

9. A system for generating scripts for simulation model development, the system comprising:
a processor; and
a memory communicatively coupled to the processor, wherein the memory stores processor instructions, which when executed by the processor, cause the processor to:
retrieve a plurality of requirements from a user input, and a Static Knowledge Corpus (SKC), and a Dynamic Knowledge Corpus (DKC) from a data storage, wherein each of the SKC and the DKC is a vector database, wherein the SKC is based on generic domain data and generic Model Based Design (MBD) guidelines data, and wherein the DKC is based on project-specific data and user-specific MBD guidelines data;
generate, via a Large Language Model (LLM), an interface list corresponding to each of the plurality of requirements using the SKC and the DKC;
generate, via the LLM, a pseudo code corresponding to each of the plurality of requirements using the interface list and the SKC;
for each of the plurality of requirements, add the corresponding interface list and the corresponding pseudo code to a configuration file; and
determine a mean intensity difference for the ROI based on the calculated intensity difference; and
identify an overlapping ROI from a plurality of ROIs based on the mean intensity difference, wherein the overlapping ROI comprises a minimum mean intensity difference.

10. The system as claimed in claim 9, wherein the processor instructions, on execution, further cause the processor to:
fine-tune the LLM based on the project-specific data and the generic domain data using an adapter-based Parameter Efficient Fine-Tuning (PEFT) technique through project-specific adapter layers and generic domain adapter layers; and
fine-tune the LLM based on the generic MBD guidelines data and the user-specific MBD guidelines data using an adapter-based PEFT technique through generic MBD guidelines adapter layers and user-specific MBD guidelines adapter layers.

11. The system as claimed in claim 9, wherein the processor instructions, on execution, further cause the processor to:
receive the generic domain data, the project-specific data, and MBD guidelines data from one or more user devices, wherein the MBD guidelines data comprise the generic MBD guidelines data and the user-specific MBD guidelines data; and;
create the SKC and the DKC from the generic domain data, the project-specific data, and the MBD guidelines data, wherein to create the processor instructions, on execution, further cause the processor to:
generate, via an embedding model, a plurality of SKC embeddings from the generic domain data and the generic MBD guidelines data to obtain the SKC; and
generate, via the embedding model, a plurality of DKC embeddings from the project-specific data and the user-specific MBD guidelines data to obtain the DKC.

12. The system as claimed in claim 11, wherein the processor instructions, on execution, cause the processor to:
identify the plurality of requirements from the user input using the DKC; and
generate, via the embedding model, a plurality of requirement embeddings corresponding to the plurality of requirements.

13. The system as claimed in claim 12, wherein to generate the interface list, the processor instructions, on execution, further cause the processor to:
compare each of the plurality of requirement embeddings with the SKC using a first similarity metric;
identify a set of sample interfaces corresponding to each of the plurality of requirements based on the first similarity metric;
input an interface identification prompt for each of the plurality of requirement embeddings to the LLM, wherein the interface identification prompt comprises the set of sample interfaces and a corresponding requirement embedding;
iteratively generate, via the LLM, the interface list based on the interface identification prompt; and
post-process, via the LLM, the interface list based on a user feedback.

14. The system as claimed in claim 13, wherein the processor instructions, on execution, cause the processor to iteratively generate, via the embedding model, a plurality of interface embeddings from the interface list to obtain an Interface List Corpus (ILC).

15. The system as claimed in claim 14, wherein to generate the pseudo code, the processor instructions, on execution, cause the processor to:
compare each of the plurality of requirement embeddings with the ILC and the SKC using a second similarity metric;
identify a sample pseudo code corresponding to each of the plurality of requirements, based on the second similarity metric;
input a pseudo code generation prompt for each of the plurality of requirement embeddings to the LLM, wherein the pseudo code generation prompt comprises the sample pseudo code and a corresponding requirement; and
iteratively generate, via the LLM, the pseudo code based on the pseudo code generation prompt.
